# FASCICULE DE BREVET EUROPEEN

(11) **EP 0 626 744 B1**
(45) Date de publication et mention de la délivrance du brevet: **28.07.1999**
(21) Numéro de dépôt: 94401154.3
(22) Date de dépôt: 25.05.1994
(51) Int. Cl.: H02H 9/00

(54) **Dispositif de limitation de courant du type placé entre une carte électronique et des moyens d'alimentation**
Strombegrenzungsvorrichtung zwischen einer Leiterplatte und einer Stromversorgung
Current limiting device between an electronic board and a power supply

(30) Priorité: 27.05.1993 FR 9306361
(43) Date de publication de la demande: 30.11.1994
(73) Titulaire: ALCATEL, 75008 Paris (FR)
(72) Inventeur: Peron, Daniel, F-22140 Prat (FR); De Hautecloque, Francis, F-22300 Lannion (FR)
(74) Mandataire: Sciaux, Edmond

(56) Documents cités:
- GB-A- 2 056 198
- US-A- 4 910 654
- US-A- 4 924 342
- US-A- 5 063 303

## Description

Le domaine de l'invention est celui des dispositifs de protection de cartes électroniques.

Plus précisément, l'invention concerne un dispositif de limitation de courant, du type placé entre une carte électronique et ses moyens d'alimentation.

En général, les moyens d'alimentation sont communs à plusieurs cartes électroniques. Ces moyens d'alimentation sont, par exemple, constitués d'un ou plusieurs convertisseurs reliés à un fond de panier comprenant une piste d'alimentation, les cartes électroniques étant amovibles et pouvant être enfichées dans ce fond de panier de façon à venir en contact électrique d'une part avec la piste d'alimentation (à travers une ou plusieurs broches) et d'autre part avec la masse.

Les dispositifs connus de protection assurent généralement une des deux fonctions suivantes :
- réduction de la sous-tension apparaissant sur le fond de panier lors de l'enfichage d'une carte, cette sous-tension étant due à l'appel de courant nécessaire à la charge des condensateurs de découplage de la carte en cours d'enfichage et à la composante inductive des pistes d'alimentation du fond de panier ;
- disjonction de la carte électronique et des moyens d'alimentation en cas de surconsommation de courant ou de court-circuit dans la carte électronique.

Les fusibles, qui constituent un premier type connu de dispositif connu de protection, présentent un intérêt limité. En effet, les fusibles assurent uniquement la fonction de disjonction. De plus, un fusible ne pouvant être utilisé qu'une seule fois, l'utilisation de ce premier type de dispositif de protection implique une intervention extérieure (afin de changer le fusible) après chaque cas de disjonction.

Un second type connu de dispositif de protection correspond à l'utilisation de bobines (ou self-inductances). Celles-ci sont placées en série avec les condensateurs de découplage, afin de réduire la sous-tension sur le fond de panier lors de l'enfichage de la carte. Ce second type de dispositif de protection présente un inconvénient majeur lié à l'utilisation de self-inductances. En effet, la mise en série d'un condensateur de découplage et d'une self-inductance constitue un circuit oscillant qui induit une nouvelle surtension liée au coefficient de montée du courant lors de l'enfichage (aussi appelé courant d'appel).

Un troisième type connu de dispositif de protection visant à pallier cet inconvénient majeur consiste à combiner les bobines avec un dispositif de limitation du courant d'appel. Toutefois, un tel dispositif de limitation de courant d'appel est complexe et difficile à mettre en oeuvre.

Le document GB 2 056 198 décrit un dispositif de limitation de courant, du type placé entre une carte électronique et des moyens d'alimentation, qui comprend :
- un élément actif possédant une résistance série variable en fonction d'un signal de commande, et délivrant un courant contrôlé;
- deux contacts générant une information de déconnexion dès qu'un opérateur commence à désenficher ladite carte;
- des moyens de commande dudit élément actif, tels que, lorsqu'ils reçoivent l'information de déconnexion; ledit signal de commande fait passer progressivement ladite résistance série de l'élément actif d'une valeur minimale à une valeur maximale en une durée de décharge.

Le brevet US 5 063 303 décrit un circuit limiteur de courant, qui comprend :
- un élément actif possédant une résistance série variable en fonction d'un signal de commande, et délivrant un courant contrôlé;
- des moyens pour mesurer l'intensité du courant, la comparer à une valeur de seuil, et générer immédiatement une information de déconnexion si l'intensité mesurée dépasse la valeur de seuil;
- des moyens de télécommande, pour générer immédiatement une information de déconnexion si ces moyens reçoivent l'ordre de mettre hors service la charge alimentée par ledit limiteur;
- des moyens de commande dudit élément actif tels que lorsqu'ils reçoivent une information de déconnexion, ledit signal de commande fait passer immédiatement ladite résistance série de l'élément actif d'une valeur minimale à une valeur maximale.

Ces dispositifs connus présentent l'inconvénient de mettre hors service la carte ou les cartes électroniques alimentées par le dispositif chaque fois qu'une surintensité de courte durée se manifeste même si sa courte durée la rend inoffensive pour l'alimentation et pour les cartes. Il est alors nécessaire de réarmer le limiteur, soit par l'intervention d'un opérateur, soit par un automatisme essayant périodiquement de rétablir le circuit. Le fonctionnement de la carte ou des cartes alimentées est donc perturbé pendant une certaine durée.

L'invention a principalement pour but de fournir un dispositif de limitation de courant qui n'interrompt pas le fonctionnement des cartes alimentées, lorsqu'une surintensité a une courte durée qui la rend inoffensive. L'invention a en outre pour but de fournir un dispositif limitant les surtensions sur des cartes électroniques alimentées par des moyens d'alimentation, lorsqu'une de ces cartes est déconnectée des moyens d'alimentation.

Un autre objectif de l'invention est de fournir un tel dispositif permettant:
- une limitation du courant d'appel d'une carte lors de sa connexion aux moyens d'alimentation ;
- une limitation de la puissance dissipée sur une carte en cas de surconsommation ou de court-circuit.

Un autre objectif de l'invention est de fournir un tel dispositif pouvant être réarmé sans aucune intervention extérieure après que le dispositif a rempli une fonction de disjonction de la carte et des moyens d'alimentation.

Un objectif complémentaire de l'invention est de fournir un tel dispositif permettant de commander une mise hors tension.

L'invention a également pour objectif de fournir un tel dispositif présentant simultanément l'ensemble des caractéristiques visées dans les objectifs cités ci-dessus.

Ces objectifs, ainsi que d'autres qui apparaîtront par la suite, sont atteints selon l'invention à l'aide d'un dispositif de limitation de courant, du type placé entre une carte électronique et des moyens d'alimentation d'au moins ladite carte électronique, lesdits moyens d'alimentation fournissant un courant d'alimentation,
ledit dispositif comprenant :
- un élément actif possédant une résistance série variable en fonction d'un signal de commande, ledit élément actif recevant ledit courant d'alimentation et délivrant à ladite carte électronique un courant contrôlé, la valeur dudit courant contrôlé étant inversement proportionnelle à la valeur de ladite résistance série variable ;
- un élément passif placé entre ledit élément actif et ladite carte électronique, ledit élément passif permettant de déterminer une valeur mesurée du courant contrôlé;
- des moyens de décision comprenant des moyens de comparaison de ladite valeur mesurée du courant contrôlé à une valeur limite du courant contrôlé, générant une information dite de déconnexion si lesdits moyens de comparaisons (18) détectent que ladite valeur mesurée est supérieure à ladite valeur limite;
- des moyens de commande dudit élément actif, tels que lorsqu'ils reçoivent une information de déconnexion ils génèrent un signal de commande qui fait passer ladite résistance série de l'élément actif d'une valeur minimale à une valeur maximale en une durée de décharge ladite valeur du courant contrôlé diminuant progressivement pendant ladite durée de décharge;
caractérisé en ce que lesdits moyens de décision comprennent en outre des moyens de retard procurant une durée de réaction entre l'instant où lesdits moyens de comparaison détectent que ladite valeur du courant est supérieure à ladite valeur limite, et l'instant où est générée l'information de déconnexion.

De cette façon, lors d'une surconsommation ou d'un court-circuit sur la carte, le dispositif selon l'invention permet d'effectuer une disjonction par isolation de la carte et des moyens d'alimentation, seulement dans les cas où la durée de cette surconsommation ou court-circuit est supérieure à la durée de réaction du limiteur.

De façon avantageuse, lesdits moyens de décision comprennent des moyens d'arrêt/démarrage pouvant recevoir une information de mise hors/en service de ladite carte électronique, lesdits moyens de décision générant ladite information de déconnexion/connexion lorsque lesdits moyens d'arrêt/démarrage reçoivent ladite information de mise hors en service.

De cette façon, le dispositif selon l'invention comprend une fonction interrupteur. En d'autres termes, il est possible de procéder à une mise hors sous tension de la carte sans aucune intervention sur celle-ci.

L'information de mise hors/en service du dispositif peut, par exemple, être générée soit de façon manuelle (avec un bouton poussoir), soit de façon logicielle.

Cette fonction interrupteur peut notamment permettre à un système central de commander la mise hors tension d'une carte périphérique lorsque celle-ci n'est plus utilisée.

Dans un mode de réalisation préférentiel de l'invention, ladite carte électronique est amovible, ladite carte électronique et lesdits moyens d'alimentation comprenant respectivement des premiers et des seconds moyens d'accouplement électrique,
lesdits moyens de décision comprenant des moyens de détection d'un passage d'un état d'accouplement à un état de non-accouplement de ladite carte électronique et desdits moyens d'alimentation à travers lesdits premiers et seconds moyens d'accouplement électrique,
lesdits moyens de décision génèrant ladite information de déconnexion lorsque lesdits moyens de détection détectent ledit passage d'un état d'accouplement à un état de non-accouplement.

De cette façon, dès que le dispositif selon l'invention détecte un début de désaccouplement de la carte et des moyens d'alimentation, il isole progressivement la carte afin d'éviter des surtensions sur les moyens d'alimentation et sur les autres cartes.

Avantageusement, lesdits premiers moyens d'accouplement électrique comprennent au moins une première broche, lesdits seconds moyens d'accouplement électrique comprenant au moins une seconde broche, ladite seconde broche étant en contact avec ladite première broche lorsque ladite carte électronique est accouplée auxdits moyens d'alimentation,
lesdits moyens de détection comprenant une première et une seconde broches supplémentaires décalées respectivement par rapport auxdites première et seconde broches.

Ce mode de réalisation correspond au cas habituel où plusieurs cartes électroniques sont enfichées dans un même panier d'alimentation.

Préférentiellement, lesdits moyens de commande sont tels que, lorsqu'ils reçoivent une information de connexion indiquant que ladite carte électronique peut être reliée électriquement auxdits moyens d'alimentation, ledit signal de commande fait passer ladite résistance série de l'élément actif d'une valeur maximale à une valeur minimale en une durée de charge, ladite valeur du courant contrôlé augmentant progressivement, pendant ladite durée de charge.

De cette façon, lorsque la carte électronique est connectée aux moyens d'alimentation, la connexion électrique est douce et progressive. En d'autres termes, le courant d'appel de la carte est limité.

Il existe plusieurs cas où les moyens de commande reçoivent l'information de connexion, et notamment :
- lors d'un enfichage de la carte (si celle-ci est amovible) ;
- lors d'une mise sous tension commandée de la carte ;
- lors d'un réarmement de la carte (après une disjonction due à une surconsommation ou un court-circuit).

Avantageusement, lesdits moyens de comparaison permettent également de comparer ladite valeur mesurée du courant contrôlé à la valeur de limitation, lesdits moyens de décision générant ladite information de connexion après une durée d'attente suivant l'instant où lesdits moyens de comparaison détectent que ladite valeur mesurée est inférieure à la valeur de limitation.

De cette façon, le réarmement du dispositif après une disjonction est automatique. En effet, lors d'une disjonction, le courant contrôlé diminue progressivement pendant la durée de décharge jusqu'à la valeur limite. Lorsque cette valeur limite est atteinte, le dispositif laisse s'écouler une durée d'attente puis tente automatiquement de remettre la carte sous tension. Lors de cette tentative de mise sous tension, le courant d'appel est limité (augmentation progressive du courant pendant la durée de charge). Deux cas peuvent alors se présenter selon que la carte est encore ou n'est plus dans un état de surconsommation ou de court-circuit :
- dans le premier cas, il y a à nouveau une disjonction (après une durée de réaction) de la carte électronique et des moyens d'alimentation ;
- dans le second cas, la carte est alimentée normalement.

Ainsi, la puissance dissipée sur la carte en cas de surconsommation ou de court-circuit est très faible et dépend des durées de charge, de décharge, de réaction et d'attente.

De façon avantageuse, lesdits moyens d'arrêt/démarrage peuvent recevoir une information de mise en service de ladite carte électronique, lesdits moyens de décision générant ladite information de connexion lorsque lesdits moyens d'arrêt/démarrage reçoivent ladite information de mise en service.

Ceci permet de compléter la fonction interrupteur fournie par le dispositif selon l'invention.

Préférentiellement, ledit élément est du type MOS.

En effet, un tel élément actif (et plus particulièrement un élément du type NMOS) possède une très faible résistance série à l'état passant.

Avantageusement, le dispositif selon l'invention comprend une résistance de protection placée entre lesdits moyens d'alimentation de la carte électronique et ladite pompe à charges.

Ceci permet de prévenir tout problème (de surconsommation ou de court-circuit par exemple) lié au dispositif de protection lui-même.

L'invention concerne également un système électronique du type comprenant des moyens d'alimentation communs à au moins deux cartes électroniques, un dispositif de limitation de courant selon l'invention étant placé entre chacune desdites cartes électroniques et lesdits moyens d'alimentation.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels ;
- la figure 1 présente un schéma logique d'un mode de réalisation particulier du dispositif selon l'invention ;
- la figure 2 présente un exemple de variation en fonction du temps de la valeur du courant délivré à une carte électronique à travers un dispositif selon l'invention tel que présenté sur la figure 1 ;
- la figure 3 présente un exemple de schéma électrique d'un mode de réalisation du dispositif selon l'invention correspondant au schéma logique présenté sur la figure 1.

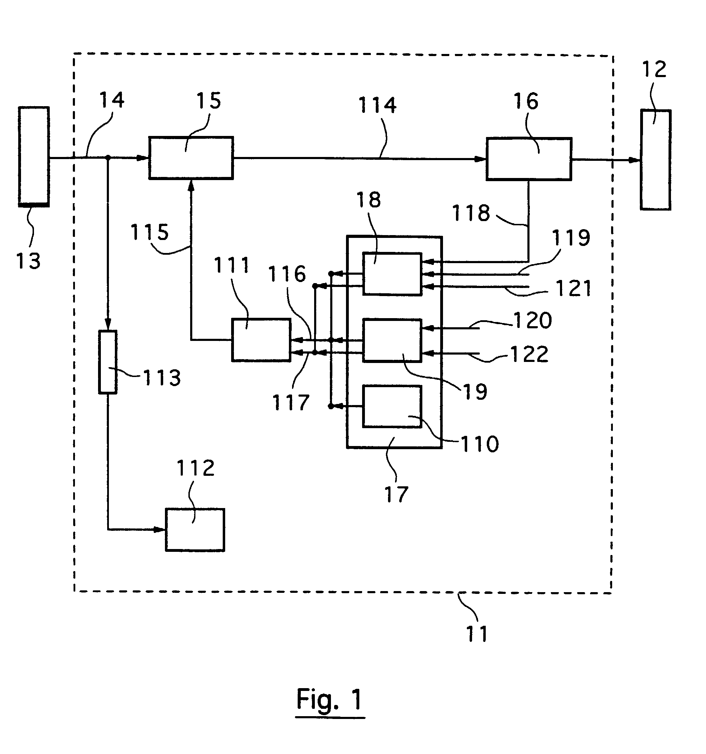

L'invention concerne donc un dispositif de limitation de courant. La figure 1 présente un schéma logique d'un mode de réalisation particulier d'un tel dispositif selon l'invention.

Ce dispositif 11 est placé en série entre une carte électronique 12 et des moyens 13 d'alimentation, ces moyens 13 d'alimentation étant communs à cette carte 12 ainsi qu'à d'autres cartes (non représentées).

Les moyens 13 d'alimentation fournissent une tension et un courant d'alimentation 14.

Le dispositif 11 de limitation de courant comprend :
- un élément actif 15 ;
- un élément passif 16 ;
- des moyens 17 de décision ;
- des moyens 111 de commande ;
- une pompe à charges 112 ;
- une résistance de protection 113.

L'élément actif 15 reçoit le courant d'alimentation 14 fourni par les moyens 13 d'alimentation, et délivre un courant contrôlé 114 à la carte électronique 12. Pour cela, l'élément actif 15 possède une résistance série variable en fonction d'un signal de commande 115. Le courant contrôlé 114 est tel que sa valeur est inversement proportionnelle à la valeur de la résistance série de l'élément actif 15.

Les moyens 111 de commande génèrent le signal de commande 115 en fonction du type d'information qu'ils reçoivent, à savoir :
- soit une information de déconnexion 116, indiquant que la carte électronique 12 doit être isolée électriquement des moyens 13 d'alimentation ;
- soit une information de connexion 117, indiquant que la carte électronique 12 peut être reliée électriquement aux moyens 13 d'alimentation.

Lorsque les moyens 111 de commande reçoivent l'information de déconnexion 116, le signal de commande 115 est tel qu'il fait passer la résistance série de l'élément actif 15 d'une valeur minimale (état passant) à une valeur maximale (état bloqué). Ce changement de valeur est effectué en une durée appelée par la suite durée de décharge. Ainsi, le passage de l'élément actif 15 d'un état passant à un état bloquant se traduit par une diminution progressive de la valeur du courant contrôlé 114, ce qui limite les surtensions sur les autres cartes et sur les moyens 13 d'alimentation.

Inversement, lorsque les moyens 111 de commande reçoivent l'information de connexion 117, le signal de commande 115 est tel qu'il fait passer la résistance série de l'élément actif 15 d'une valeur maximale (état bloqué) à une valeur minimale (état passant). Ce changement de valeur est effectué en une durée appelée par la suite durée de charge. Ainsi, le passage de l'élément actif 15 d'un état passant à un état bloquant se traduit par une augmentation progressive de la valeur du courant contrôlé 114, ce qui limite, comme précédemment, les surtensions sur les autres cartes et sur les moyens 13 d'alimentation.

L'information de déconnexion 116 est fournie par les moyens 17 de décision. Plus précisément, cette information de déconnexion 116 peut être fournie par différents moyens compris dans les moyens 17 de décision, à savoir :
- des moyens 18 de comparaison ;
- des moyens 19 d'arrêt/démarrage ;
- des moyens 110 de détection.

Les moyens 18 de comparaison permettent de comparer une valeur mesurée 118 du courant contrôlé 114 et une valeur limite 119 de ce courant contrôlé 114.

La valeur mesurée 118 du courant contrôlé 114 est déterminée par l'élément passif 16, sans que ce dernier modifie le courant contrôlé 114 fourni à la carte électronique 12.

Lorsque les moyens 18 de comparaison détectent que la valeur mesurée 118 est supérieure à la valeur limite 119, ils génèrent, après une durée de réaction, l'information de déconnexion 116.

Les moyens 19 d'arrêt/démarrage peuvent également générer l'information de déconnexion 116, lorsqu'ils reçoivent une information de mise hors service 120 de la carte électronique 12. Cette information de mise hors service 120 est, par exemple, générée par un utilisateur grâce à un interrupteur ou bien par un système principal dans le cas où la carte 12 est une carte périphérique.

Les moyens 110 de détection peuvent être mis en oeuvre dans le cas où les cartes électroniques sont amovibles et peuvent être accouplées ou non aux moyens 13 d'alimentation. Les moyens 110 de détection sont par exemple constitués d'une paire supplémentaire de broche de contact décalées, si l'accouplement se fait par l'intermédiaire de paires de broches de contact.

Les moyens 110 de détection génèrent l'information de déconnexion 116 lorsqu'ils détectent que la carte 12 va être déconnectée des moyens 110 d'alimentation.

De même que l'information de déconnexion 116, l'information de connexion 117 est fournie par les moyens 17 de décision, et, plus précisément, soit par les moyens 18 de comparaison, soit par les moyens 19 d'arrêt/démarrage.

Lorsque les moyens 18 de comparaison détectent que la valeur mesurée 118 est égale à une valeur nulle 121, ils génèrent, après une durée d'attente, l'information de connexion 117.

Les moyens 19 d'arrêt/démarrage peuvent également générer l'information de connexion 117, lorsqu'ils reçoivent une information de mise en service 122 de la carte électronique 12. La génération de cette information de mise en service 122 est externe au dispositif 11 et correspond, par exemple, à l'action d'un utilisateur sur un interrupteur ou bien à un signal généré par un système central (dans le cas où la carte 12 est une carte périphérique).

Le multiplieur de tension 112 génère la tension d'alimentation nécessaires au dispositif 11 (et notamment à la commande de l'élément actif 15) à partir du signal d'alimentation 14 fourni par les moyens 13 d'alimentation.

On peut prévoir de placer une résistance de protection 113 entre les moyens 13 d'alimentation et le multiplieur de tension, afin d'éviter qu'un mauvais fonctionnement du dispositif lui-même n'engendre des dégâts sur les moyens 13 d'alimentations ou sur la carte 12.

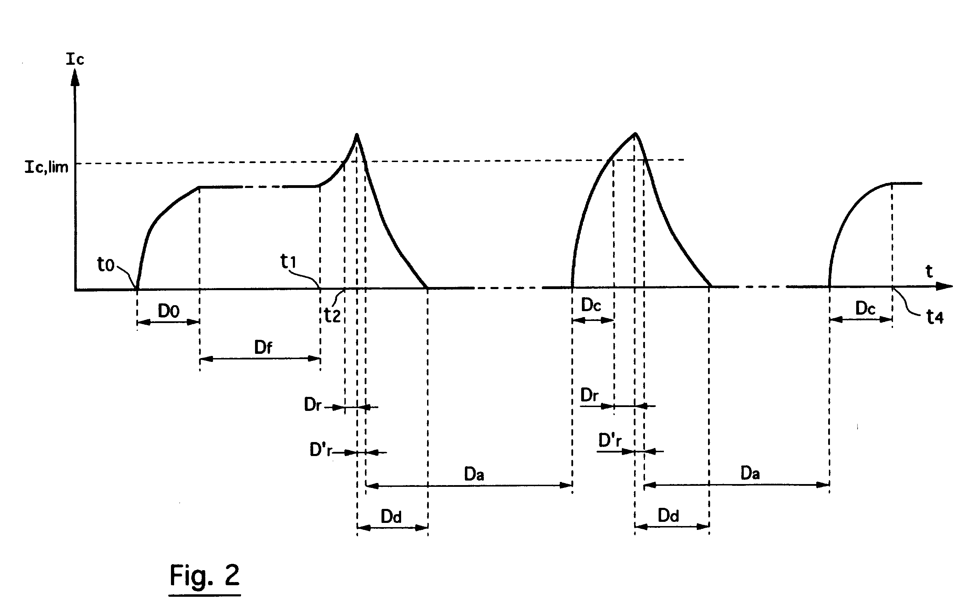

Le fonctionnement de ce mode de réalisation du dispositif selon l'invention est maintenant expliqué en relation avec la figure 2. Cette figure 2 présente un exemple de variation en fonction du temps t de la valeur I_{c} du courant contrôlé 114 (c'est-à-dire du courant délivré à la carte électronique 12 à travers le dispositif 11 de limitation de courant).

L'instant t₀ correspond à l'instant de mise sous tension de la carte. Pendant une durée D₀, correspondant au temps de démarrage du multiplieur de tension, les moyens de commande diminuent alors la résistance de l'élément actif jusqu'à le rendre passant. Ainsi, la valeur I_{c} du courant contrôlé augmente progressivement et la tension est appliquée à la carte électronique avec une durée de charge D₀ permettant de charger les condensateurs de cette carte tout en limitant l'appel de courant.

Dans cet exemple, la carte fonctionne ensuite normalement pendant une durée D_{f} : la valeur mesurée du courant contrôlé est inférieure à la valeur limite, et l'élément actif est maintenu passant.

A partir de l'instant t₁, la consommation de courant de la carte augmente anormalement.

A l'instant t₂, la valeur mesurée I_{c} du courant contrôlé est supérieure à la valeur limite I_{c,lim}. Ceci est détecté par les moyens de comparaison qui, après une durée de réaction Dᵣ, délivrent une information de déconnexion aux moyens de commande. A la réception de cette information de déconnexion et pendant une durée de décharge D_{d}, les moyens de commande augmentent la résistance de l'élément actif jusqu'à le rendre bloquant.

Les moyens de comparaison détectent que le courant redescend en dessous de la valeur limite I_{c,lim} après un nouveau temps de réaction D'ᵣ et, après une durée d'attente Dₐ, tentent de remettre sous tension la carte. Ainsi, après cette durée d'attente Dₐ, les moyens de commande diminuent la résistance de l'élément actif pendant la durée de charge jusqu'à le rendre passant.

Dans l'exemple présenté sur la figure 2, la surconsommation de courant étant toujours présente à ce moment, la valeur mesurée I_{c} est à nouveau supérieure à la valeur limite I_{c}, lim et la carte est une nouvelle fois déconnectée électriquement (après la durée de réaction Dᵣ et la durée de décharge D_{d}).

La carte est ainsi réarmée automatiquement et périodiquement. La puissance dissipée sur la carte en cas de surconsommation est très faible et est déterminée par le choix des durées de charge D_{c}, de réaction Dᵣ et D'ᵣ et d'attente Dₐ.

Dans l'exemple de la figure 2, à l'instant t₄, la surconsommation a disparue et la carte fonctionne normalement.

Comme expliqué en relation avec la figure 1, l'information de déconnexion (qui provoque une baisse de courant pendant la durée de décharge D_{d} et donc l'isolement électrique de la carte) peut également être générée par les moyens d'arrêt/démarrage (assurant la fonction interrupteur), ou encore par les moyens de détection.

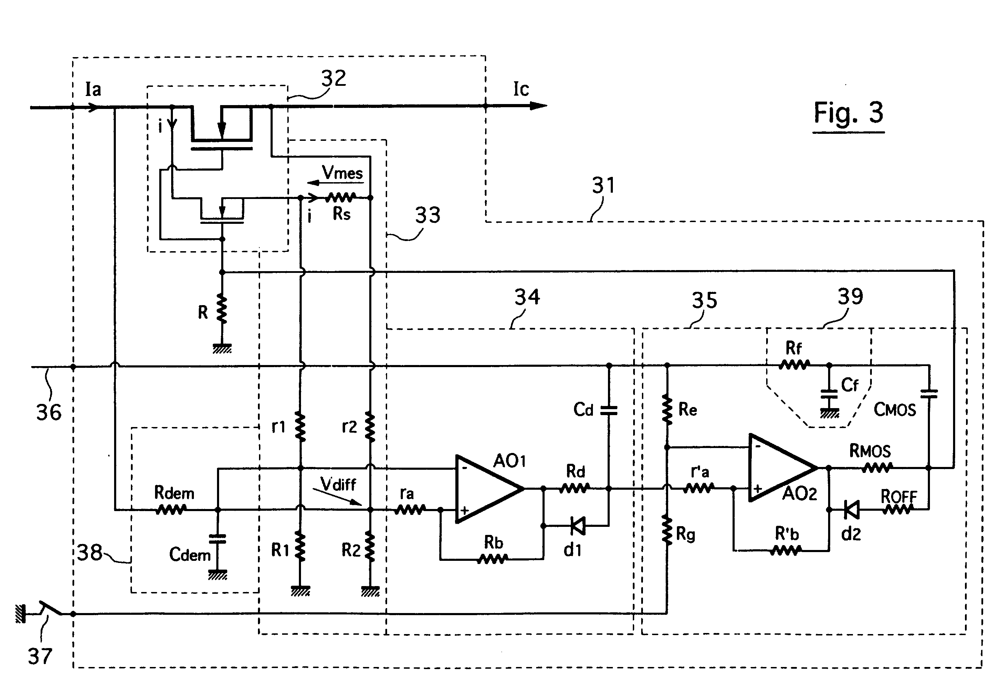

La figure 3 présente un exemple de schéma électrique d'un mode de réalisation du dispositif selon l'invention correspondant au schéma logique présenté sur la figure 1.

Le dispositif 31 de limitation de courant reçoit un courant d'alimentation Iₐ (ainsi que le signal 36 issu du multiplieur de tension du type pompe à charges) et délivre un courant contrôlé I_{c}.

Ce dispositif 31 comprend :
- un élément actif 32 de type MOS, comprenant un capteur interne de courant dérivant une fraction i = Iₐ/n du courant d'alimentation Iₐ ;
- des moyens 33 de mesure du courant i, comprenant une résistance Rₛ permettant de mesurer une tension Vₘₑₛ = Rₛ.i. Cette tension mesurée Vₘₑₛ est alors décalée et inversée par le réseau constitué des quatre résistances R₁, R₂, r₁ et r₂ ;
- des moyens 34 de décision comprenant un ampli opérationnel AO₁, trois résistances rₐ, R_{b} et R_{d}, un condensateur C_{d} et une diode d₁ ( le réseau (d₁, R_{d}, C_{d}) générant les durées d'attente et de réaction) ;
- des moyens 35 de commande comprenant un ampli opérationnel AO₂, six résistances Rₑ, R_{g}, r'ₐ, R'_{b}, R_{MOS}, et R_{OFF}, une diode d₂ et un condensateur C_{MOS} (le réseau (d₂, R_{OFF}, R_{MOS}) générant les durées de charge et de décharge) ;
- des moyens 38, constitués d'un condensateur C_{dem} et une résistance R_{dem}, permettant de forcer un démarrage rapide lors de la mise sous tension de la carte ;
- des moyens 39, constitués d'un condensateur C_{f} et une résistance R_{f}, permettant de filtrer la tension 36 délivrée par le multiplieur de tension et appliquée sur la grille de l'élément actif 32 du type MOS.

Un interrupteur 37 permet de commander, sans intervention sur la carte, une mise hors tension ou sous tension de la carte en intervenant directement sur les moyens 35 de commande.

## Revendications

1. Dispositif de limitation de courant (11), du type placé entre une carte électronique (12) et des moyens d'alimentation (13) d'au moins ladite carte électronique, lesdits moyens d'alimentation (13) fournissant un courant d'alimentation, comprenant :
- un élément actif (15) possédant une résistance série variable en fonction d'un signal de commande (115), ledit élément actif (15) recevant ledit courant d'alimentation (14) et délivrant à ladite carte électronique (12) un courant contrôlé (114), la valeur dudit courant contrôlé étant inversement proportionnelle à la valeur de ladite résistance série variable;
- un élément passif (16) placé entre ledit élément actif (15) et ladite carte électronique (12), ledit élément passif (16) permettant de déterminer une valeur mesurée du courant contrôlé (114);
- des moyens de décision (17) comprenant des moyens de comparaison (18) de ladite valeur mesurée du courant contrôlé à une valeur limite du courant contrôlé, générant une information dite de déconnexion (116) si lesdits moyens de comparaisons (18) détectent que ladite valeur mesurée est supérieure à ladite valeur limite;
- des moyens de commande (111) dudit élément actif (15), tels que lorsqu'ils reçoivent une information de déconnexion (116) ils génèrent un signal de commande (115) qui fait passer ladite résistance série de l'élément actif (15) d'une valeur minimale à une valeur maximale en une durée de décharge (D_{d}) ladite valeur du courant contrôlé diminuant progressivement pendant ladite durée de décharge;
caractérisé en ce que lesdits moyens de décision comprennent en outre des moyens de retard (Rd, Cd, d1) procurant une durée de réaction (Dr) entre l'instant où lesdits moyens de comparaison (18) détectent que ladite valeur du courant est supérieure à ladite valeur limite,
et l'instant où est générée l'information de déconnexion.

2. Dispositif selon la revendication 1, caractérisé en ce que lesdits moyens de décision (17) comprennent des moyens d'arrêt/démarrage (19) pouvant recevoir une information de mise hors service (120) de ladite carte électronique (12), lesdits moyens de décision (17) générant ladite information de déconnexion (116) lorsque lesdits moyens d'arrêt/démarrage (19) reçoivent ladite information de mise hors service (120).

3. Dispositif selon l'une quelconque des revendications 1 et 2, caractérisé en ce que ladite carte électronique (12) est amovible, ladite carte électronique et lesdits moyens d'alimentation (13) comprenant respectivement des premiers et des seconds moyens d'accouplement électrique,
et en ce que lesdits moyens de décision (17) comprennent des moyens de détection (110) d'un passage d'un état d'accouplement à un état de non-accouplement de ladite carte électronique (12) et desdits moyens d'alimentation (13) à travers lesdits premiers et seconds moyens d'accouplement électrique,
et en ce que lesdits moyens de décision (17) génèrent ladite information de déconnexion (116) lorsque lesdits moyens de détection (110) détectent ledit passage d'un état d'accouplement à un état de non-accouplement.

4. Dispositif selon la revendication 3, caractérisé en ce que lesdits premiers moyens d'accouplement électrique comprennent au moins une première broche, lesdits seconds moyens d'accouplement électrique comprenant au moins une seconde broche, ladite seconde broche étant en contact avec ladite première broche lorsque ladite carte électronique est accouplée auxdits moyens d'alimentation,
et en ce que lesdits moyens de détection comprennent une première et une seconde broches supplémentaires décalées respectivement par rapport auxdites première et seconde broches.

5. Dispositif selon l'une quelconque des revendications 1 à 4, caractérisé en ce que lesdits moyens de commande (111) sont tels que, lorsqu'ils reçoivent une information de connexion (117) indiquant que ladite carte électronique (12) peut être reliée électriquement auxdits moyens d'alimentation (13), ledit signal de commande (115) fait passer ladite résistance série de l'élément actif (15) d'une valeur maximale à une valeur minimale en une durée de charge (D_{c}), ladite valeur du courant contrôlé augmentant progressivement, pendant ladite durée de charge.

6. Dispositif selon l'une quelconque des revendications 1 à 5, caractérisé en ce que lesdits moyens de comparaison (18) permettent également de comparer ladite valeur mesurée du courant contrôlé à une valeur de limitation, lesdits moyens de décision (17) générant une information de connexion (117) après une durée d'attente (Dₐ) suivant l'instant où lesdits moyens de comparaison (18) détectent que ladite valeur mesurée est inférieur à ladite valeur de limitation.

7. Dispositif selon l'une quelconque des revendications 2 à 6, caractérisé en ce que lesdits moyens d'arrêt/démarrage (19) peuvent recevoir une information de mise en service (122) de ladite carte électronique (12), lesdits moyens de décision (17) générant une information de connexion (117) lorsque lesdits moyens d'arrêt/démarrage (19) reçoivent ladite information de mise en service (122).

8. Dispositif selon l'une quelconque des revendications 1 à 7, caractérisé en ce que ledit élément actif (15) est du type MOS.

9. Dispositif selon l'une quelconque des revendications 1 à 8, caractérisé en ce qu'il comprend une résistance de protection (113) placée entre lesdits moyens d'alimentation (13) de la carte électronique (12) et ledit multiplieur de tension (112).

10. Système électronique du type comprenant des moyens d'alimentation communs à au moins deux cartes électroniques, caractérisé en ce qu'un dispositif de limitation de courant (11) selon l'une quelconque des revendications 1 à 9 est placé entre chacune desdites cartes électroniques (12) et lesdits moyens d'alimentation (13).

## Patentansprüche

1. Strombegrenzungsvorrichtung (11) von dem Typ, der zwischen einer Elektronik-Karte (12) und Versorgungsmitteln (13) wenigstens der Elektronik-Karte angeordnet wird, wobei die Versorgungsmittel (13) einen Versorgungsstrom liefern, welche umfasst:
- ein aktives Element (15), das einen in Abhängigkeit von einem Steuersignal (115) veränderbaren Reihenwiderstand hat, wobei das aktive Element (15) den Versorgungsstrom (14) empfängt und an die Elektronik-Karte (12) einen gesteuerten Strom (114) abgibt, wobei der Wert dieses gesteuerten Stroms umgekehrt proportional ist zum Wert des veränderbaren Reihenwiderstands;
- ein passives Element (16), das zwischen dem aktiven Element (15) und der Elektronik-Karte (12) angeordnet ist und das es erlaubt, einen Messwert des gesteuerten Stroms (114) zu bestimmen;
- Entscheidungsmittel (17), die Mittel zum Vergleichen (18) des Messwerts des gesteuerten Stroms mit einem Grenzwert des gesteuerten Stroms umfassen, die eine sogenannte Trenninformation (116) erzeugen, wenn die Mittel zum Vergleichen (18) erfassen, dass der Messwert größer als der Grenzwert ist;
- Steuermittel (111) für das aktive Element (15) die, wenn sie eine Trenninformation (116) empfangen, ein Steuersignal (115) erzeugen, das den Reihenwiderstand des aktiven Elements (15) von einem Minimalwert auf einen Maximalwert während einer Entladungszeit (D_{d}) übergehen lässt, wobei der Wert des gesteuerten Stroms während der Entladungszeit allmählich abnimmt;
dadurch gekennzeichnet, dass die Entscheidungsmittel (17) ferner Verzögerungsmittel (Rd, Cd, d1) umfassen, die eine Reaktionszeit (Dr) zwischen dem Zeitpunkt, wo die Vergleichsmittel (18) erfassen, dass der Wert des Stroms größer als der Grenzwert ist, und dem Zeitpunkt, wo die Trenninformation erzeugt wird, hervorrufen.

2. Vorrichtung nach Anspruch 1, dadurch gekennzeichnet, dass die Entscheidungsmittel (17) Anhalte-Anfahrmittel (19) umfassen, die eine Information (120) zur Außerbetriebnahme der Elektronik-Karte (12) empfangen können, wobei die Entscheidungsmittel (17) die Trenninformation (116) erzeugen, wenn die Anhalte-Anfahrmittel (19) die Information zur Außerbetriebnahme (120) empfangen.

3. Vorrichtung nach einem beliebigen der Ansprüche 1 und 2, dadurch gekennzeichnet, dass die Elektronik-Karte (12) entfernbar ist, wobei die Elektronik-Karte und die Versorgungsmittel (13) jeweils erste und zweite elektrische Kopplungsmittel umfassen,
und dass die Entscheidungsmittel (17) Erfassungsmittel (110) zum Erfassen eines Übergangs der Elektronik-Karte (12) und der Versorgungsmittel (13) von einem Kopplungszustand in einen Nichtkopplungszustand über die ersten und zweiten elektrischen Kopplungselemente umfassen,
und dass die Entscheidungsmittel (17) die Trenninformation (116) erzeugen, wenn die Erfassungsmittel (110) den Übergang von einem Kopplungszustand in einen Nichtkopplungszustand erfassen.

4. Vorrichtung nach Anspruch 3, dadurch gekennzeichnet, dass die ersten elektrischen Kopplungsmittel wenigstens einen ersten Stift und die zweiten elektrischen Kopplungsmittel wenigstens einen zweiten Stift umfassen, wobei der zweite Stift in Kontakt mit dem ersten Stift ist, wenn die Elektronik-Karte an die Versorgungsmittel gekoppelt ist,
und dass die Erfassungsmittel einen ersten und einen zweiten Zusatz-Stift umfassen, die in Bezug auf den ersten und zweiten Stift versetzt sind.

5. Vorrichtung nach einem beliebigen der Ansprüche 1 bis 4, dadurch gekennzeichnet, dass die Steuermittel (111) so sind, dass, wenn sie eine Verbindungsinformation (117) empfangen, die angibt, dass die Elektronik-Karte (12) mit den Versorgungsmitteln (13) elektrisch verbunden werden kann, das Steuersignal (115) den Reihenwiderstand des aktiven Elements (15) von einem Maximalwert auf einen Minimalwert in einer Änderungszeit (D_{c}) übergehen lässt, wobei der Wert des gesteuerten Stroms während dieser Änderungszeit allmählich zunimmt.

6. Vorrichtung nach einem beliebigen der Ansprüche 1 bis 5, dadurch gekennzeichnet, dass die Mittel zum Vergleichen (18) es ferner erlauben, den Messwert des gesteuerten Stroms mit einem Begrenzungswert zu vergleichen, wobei die Entscheidungsmittel (17) eine Verbindungsinformation (117) nach einer Wartezeit (Dₐ) erzeugen, die auf den Zeitpunkt folgt, wo die Mittel zum Vergleichen erfassen, dass der Messwert kleiner als der Begrenzungswert ist.

7. Vorrichtung nach einem beliebigen der Ansprüche 2 bis 6, dadurch gekennzeichnet, dass die Anhalte-Anfahrmittel (19) eine Information zur Inbetriebnahme (122) der Elektronik-Karte (12) empfangen können, wobei die Entscheidungsmittel (17) eine Verbindungsinformation (117) erzeugen, wenn die Anhalte-Anfahrmittel (19) die Information zur Inbetriebnahme (122) empfangen.

8. Vorrichtung nach einem beliebigen der Ansprüche 1 bis 7, dadurch gekennzeichnet, dass das aktive Element (15) vom MOS-Typ ist.

9. Vorrichtung nach einem beliebigen der Ansprüche 1 bis 8, dadurch gekennzeichnet, dass sie einen Schutzwiderstand (113) umfasst, der zwischen den Versorgungsmitteln (13) der Elektronik-Karte (12) und dem Spannungsvervielfacher (112) angeordnet ist.

10. Elektroniksystem von dem Typ, der wenigstens zwei Elektronik-Karten gemeinsame Versorgungsmittel umfasst, dadurch gekennzeichnet, dass eine Strombegrenzungsvorrichtung (11) nach einem beliebigen der Ansprüche 1 bis 9 zwischen jeder der Elektronik-Karten (12) und den Versorgungsmitteln (13) angeordnet ist.

## Claims

1. Current limiter device (11), of the type disposed between an electronic card (12) and power supply means (13) of at least said electronic card, said power supply means (13) supplying a power supply current, comprising:
- an active component (15) having a series resistance that varies in accordance with a control signal (115), said active component (15) receiving said power supply current (14) and delivering to said electronic card (12) a controlled current (114), the value of said controlled current being inversely proportional to the value of said variable series resistance;
- a passive component (16) disposed between said active component (15) and said electronic card (12), said passive component (16) determining a measured value of the controlled current (114);
- decision means (17) comprising comparator means (18) for comparing said measured value of the controlled current to a limit value of the controlled current and generating a disconnection indication (116) if said comparator means (18) detect that said measured value is greater than the said limit value; and
- control means (111) for said active component (15) such that if they receive a disconnection indication (116) they generate a control signal (115) that causes said series resistance of the active component (15) to change from a minimal value to a maximal value over a discharging time period (D_{d}), said controlled current value progressively falling during said discharging time period;
characterised in that said decision means further comprise time-delay means (R_{d}, C_{d}, d₁) procuring a reaction time period (Dᵣ) between the time at which said comparator means (18) detect that said current value is greater than said limit value and the time at which the disconnection indication is generated.

2. Device according to claim 1, characterised in that said decision means (17) comprise start/stop means (19) adapted to receive a power-down indication (120) in respect of said electronic card (12), said decision means (17) generating said disconnection indication (116) when said start/stop means (19) receive said power-down indication (120).

3. Device according to claim 1 or claim 2, characterised in that said electronic card (12) is removable, said electronic card and said power supply means (13) respectively comprising first and second electrical coupling means,
and in that said decision means (17) comprise means (110) for detecting a change from a coupling state to a non-coupling state of said electronic card (12) and said power supply means (13) via said first and second electrical coupling means,
and in that said decision means (17) generate a disconnection indication (116) when said detection means (110) detect said change from a coupling state to a non-coupling state.

4. Device according to claim 3, characterised in that said first electrical coupling means comprise at least a first pin, said second electrical coupling means comprising at least a second pin, said second pin being in contact with said first pin when said electronic card is coupled to said power supply means, and in that said detector means comprise first and second supplementary pins offset respectively relative to said first and second pins.

5. Device according to any one of claims 1 to 4, characterised in that said control means (111) are such that, if they receive a connection indication (117) indicating that said electronic card (12) can be electrically connected to said power supply means (13), said control signal (115) causes said series resistance of the active component (15) to change from a maximal value to a minimal value in a charging time period (D_{c}), said controlled current value increasing progressively during said charging time period.

6. Device according to any one of claims 1 to 5, characterised in that said comparator means (18) also compare said measured value of the controlled current to a limitation value, said decision means (17) generating a connection indication (117) after a waiting time period (Dₐ) following the time at which said comparator means (18) detect that said measured value is less than said limitation value.

7. Device according to any one of claims 2 to 6, characterised in that said start/stop means (19) can receive a power-up indication (122) in respect of said electronic card (12), said decision means (17) generating a connection indication (117) if said start/stop means (19) receive said power-up indication (122).

8. Device according to any one of claims 1 to 7, characterised in that said active component (15) is an MOS component.

9. Device according to any one of claims 1 to 8, characterised in that it comprises a protective resistor (113) disposed between said power supply means (13) of the electronic card (12) and said voltage multiplier (112).

10. Electronic system comprising power supply means common to at least two electronic cards, characterised in that a current limiter device (11) according to any one of claims 1 to 9 is disposed between each of said electronic cards (12) and said power supply means (13).
